# EUROPÄISCHE PATENTANMELDUNG

(11) **EP 2 620 457 A1**
(43) Veröffentlichungstag der Anmeldung: **31.07.2013**
(21) Anmeldenummer: 12152857.4
(22) Anmeldetag: 27.01.2012
(51) Int. Cl.: C08G 18/10, C08G 18/12, C08G 18/48, C09J 175/04

(54) **Beschleunigte Durchhärtung von 1K-Polyurethanen**

(71) Anmelder: Sika Technology AG, 6340 Baar (CH)
(72) Erfinder: Mennecke, Klaas, 79807 Lottstetten (DE)
(74) Vertreter: Sika Patent Attorneys

(57) **Zusammenfassung**

Die vorliegende Erfindung betrifft Zusammensetzungen mit hoher Durchhärtegeschwindigkeit, umfassend ein Polyurethan, dadurch gekennzeichnet, dass das Polyurethan erhältlich ist durch Umsetzung mindestens eines Polyols mit mindestens einem Polyisocyanat 1, wobei das Verhältnis der OH-Gruppen der Polyole zu den Isocyanatgruppen mehr als 1:1 beträgt, und anschließende Umsetzung des entstehenden Polyurethanprepolymers mit mindestens einem von Polyisocyanat 1 unterschiedlichen (aromatischen) Polyisocyanat 2, wobei die Isocyanatgruppen aus den Polyisocyanaten 1 und 2 gegenüber den OH-Gruppen aus den Polyolen über die beide Reaktionsschritte im Überschuss vorliegen. Solche Zusammensetzungen weisen im Vergleich zu konventionell herstellbaren Polyurethanzusammensetzungen eine signifikant reduzierte Durchhärtungszeit bei gleichzeitiger Verbesserung der mechanischen Eigenschaften, insbesondere der Bruchdehnung, auf, ohne dass für die Verbesserung dieser Eigenschaften der Zusatz von Vernetzern erforderlich ist. Die beschriebenen Zusammensetzungen können zweckmäßig als Klebstoff oder Bestandteile von Klebstoffen, insbesondere von niedrigviskosen Einkomponentenklebstoffen sowie von Dichtstoffen eingesetzt werden.

## Beschreibung

### Technisches Gebiet

Die vorliegende Erfindung betrifft das Gebiet der Durchhärtung von Einkomponenten (1K-)-Polyurethanen sowie die Verwendung solcher Polyurethane für Kleb- oder Dichtstoffe.

### Stand der Technik

Polyurethan-Zusammensetzungen zur Verwendung in Klebstoffen oder Dichtstoffen sind seit Langem bekannt. Diese Polyurethane beruhen im Wesentlichen auf Reaktionsprodukten von Polyolen und Polyisocyanaten. Im Fall von 1K-Polyurethan-Kleb- oder Dichtstoffen weisen Polyurethane überschüssige Isocyanatgruppen auf, die bei Luftkontakt mit in der Luft enthaltener Feuchtigkeit reagieren und aushärten. Für die Aushärtung von 1K-Polyurethan-Kleb- und Dichtstoffen sind jedoch meist relativ lange Härtezeiten erforderlich, die bis zu 30 Tagen bis zur vollständigen Aushärtung des Polyurethans in Anspruch nehmen können.

Um die Durchhärtegeschwindigkeit von Polyurethanen zu erhöhen, wurde im Stand der Technik vor allem auf die Modifikationen der Polyolkomponente in den Prepolymeren zurückgegriffen. Dabei hat es sich gezeigt, dass eine höhere Hydrophilie des Polyols und eine damit verbundene höhere Polarität die Durchhärtegeschwindigkeit erhöhen können, weil der nucleophile Angriff auf die Isocyanat-Funktionalität erleichtert wird. Nachteilig bei diesem Ansatz ist es jedoch, dass die Polyole mit zunehmender Hydrophilie und Polarität eine stärkere Quellung des Klebstoffs in Wasser bewirken.

### Darstellung der Erfindung

Aufgabe der vorliegenden Erfindung ist es daher, die Nachteile des Standes der Technik zu überwinden, insbesondere eine Zusammensetzung bereitzustellen, die über eine schnellere Durchhärtungsgeschwindigkeit im Vergleich zu konventionellen Polyurethan-Zusammensetzungen verfügt. Gleichzeitig soll eine nachteilige Veränderung der mechanischen Eigenschaften weitgehend unterbunden und damit die Nachteile des Standes der Technik beseitigt werden.

Weiterhin ist es Aufgabe der vorliegenden Erfindung, ein Verfahren bereitzustellen, mit dem schneller aushärtende Polyurethan-Zusammensetzungen in einfacher Weise und mit einer möglichst geringen Anzahl von Komponenten zur Verfügung gestellt werden können. Schließlich ist es Aufgabe der vorliegenden Erfindung, Klebstoffe und Dichtstoffe bereitzustellen, die innerhalb möglichst kurzer Zeit aushärten können.

Überraschenderweise werden diese Probleme durch eine Zusammensetzung nach Anspruch 1 gelöst, die ein Polyurethan umfasst, wobei das Polyurethan erhältlich ist durch die Umsetzung mindestens eines Polyols mit mindestens einem Polyisocyanat 1, wobei das Verhältnis der OH-Gruppen der Polyole zu den Isocyanatgruppen mehr als 1:1 beträgt und anschließende Umsetzung des entstehenden Polyurethanprepolymers mit mindestens einem vom Polyisocyanat 1 unterschiedlichen Polyisocyanat 2, wobei die Isocyanatgruppen aus den Polyisocyanaten 1 und 2 gegenüber den OH-Gruppen aus den Polyolen über die beide Reaktionsschritte im Überschuss vorliegen.

Die Umsetzung des mindestens einen Polyols mit dem mindestens einem Polyisocyanat 1, wobei das Verhältnis der OH-Gruppen der Polyole zu den Isocyanatgruppen mehr als 1:1 beträgt, führt dazu, dass sämtliche Isocyanatgruppen des Polyisocyanats 1 mit OH-Gruppen des Polyols zu Urethanen umgesetzt werden und keine überschüssigen Isocyanate mehr vorhanden sind. Durch die anschließende Umsetzung des entstehenden Polyurethanprepolymers, das nur noch OH-Gruppen enthält, mit mindestens einem vom Polyisocyanat 1 unterschiedlichen (aromatischen) Polyisocyanat 2 entsteht ein Polyurethanpolymer mit überschüssigen Isocyanatgruppen, die sich nur vom Polyisocyanat 2 ableiten.

Weiterhin wird die Aufgabe der vorliegenden Erfindung durch ein Verfahren zur Herstellung einer Polyurethanzusammensetzung gelöst, das a) die Umsetzung mindestens eines Polyols mit mindestens einem Polyisocyanat umfasst, wobei das Verhältnis der OH-Gruppen der Polyole zu den Isocyanatgruppen mehr als 1:1 beträgt und b) die Umsetzung des entstehenden Polyurethanprepolymers mit mindestens einem vom Polyisocyanat 1 unterschiedlichen (aromatischen) Polyisocyanat 2, wobei die Isocyanatgruppen aus den Polyisocyanaten 1 und 2 gegenüber den OH-Gruppen aus den Polyolen über die beide Reaktionsschritte im Überschuss vorliegen. Auch in diesem Verfahren reagiert das mindestens eine Polyisocyanat 1 im ersten Reaktionsschritt hinsichtlich der Isocyanatgruppen vollständig mit den OH-Gruppen der Polyole ab und das entstehende Prepolymer ist im Wesentlichen frei von Isocyanatgruppen.

Es wurde überraschenderweise gefunden, dass die erfindungsgemäßen Zusammensetzungen eine signifikant schnellere Durchhärtung aufweisen, als vergleichbare Zusammensetzungen, in denen das Polyurethan durch direkte Umsetzung mindestens eines Polyols mit einer Mischung der Polyisocyanate 1 und 2 erhalten wird.

Mit "*Poly*" beginnende Substanznamen wie Polyol oder Polyisocyanat bezeichnen Substanzen, die formal zwei oder mehr der in ihrem Namen vorkommenden funktionellen Gruppen pro Molekül enthalten

Der Begriff *"Polyisocyanat"* umfasst im vorliegenden Dokument Verbindungen mit zwei oder mehr Isocyanatgruppen, unabhängig davon, ob es sich dabei um monomere Diisocyanate, oligomere Polyisocyanate oder Isocyanatgruppen aufweisende Polymere mit einem relativ hohen Molekulargewicht handelt.

Hinsichtlich der in die Polyisocyanate einzubeziehenden Polyisocyanate unterliegt die vorliegende Erfindung keinen relevanten Beschränkungen. So können zweckmäßig monomere Di- oder Triisocyanate, oligomere Isocyanate oder Isocyanatgruppen aufweisende Polymere verwendet werden. Bevorzugt ist als Polyisocyanat jedoch ein Isocyanat mit zwei oder mehr Isocyanatgruppen in Form eines monomeren Di- oder Triisocyanates zu verwenden. Als monomere Di- oder Triisocyanate sind beispielsweise 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3-und -1,4-diisocyanat, 1-Methyl-2,4- und -2,6-diisocyanatocyclohexan und beliebige Gemische dieser Isomeren, 1-Isocyanato-3,3,5-trimethyl-5-isocyanatomethyl-cyclohexan (= Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), mund p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate, wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan und Tris-(4-isocyanatophenyl)-thiophosphat einzusetzen.

Bevorzugt sind im Rahmen der vorliegenden Erfindung als Polyisocyanat 1 aliphatische und cycloaliphatische Isocyanate, wie beispielsweise 1,4-Tetramethylendiisocyanat, 2-Pentamethylen-1-5-diisocyanat, 1,6-Hexamethylendiisocyanat (HDI), 2,2,4- und 2,4,4-Trimethyl-1,6-hexamethylendiisocyanat, 1,10-Dekamethylendiisocyanat, 1,12-Dodecamethylendiisocyanat, Cyclohexan-1,3 und 1-4-Diisocyanat oder 1-Diisocyanato-3,3,5-trimethyl-5-isocyanatometylcyclohexan (IPDI). In einer weiteren bevorzugten Ausführungsform wird das Polyisocyanat ausgewählt aus Hexamethylendiisocyanat (HDI) und Methylendiphenyldiisocyanat (MDI), was den Vorteil hat, dass niedrigviskose Prepolymere gebildet werden.

Bei dem Polyisocyanat 2 handelt es sich vorzugsweise um ein aromatisches Polyisocyanat, wie beispielsweise m- und p-Xylylendiisocyanat (m- und p-XDI), mund p-Tetramethyl-1,3- und -1,4-xylylendiisocyanat (m- und p-TMXDI), 2,4 und 2,6-Tolylendiisocyanat, 4,4'-, 2,4'- und 2,2'-Diphenylmethandiisocyanat und beliebige Gemische dieser Isomeren (MDI), und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol und Tris-(4-isocyanatophenyl)-methan. In einer besonders bevorzugten Ausführungsform handelt es sich bei dem Polyisocyanat 2 um Tolylendiisocyanat (TDI).

In den vorstehend beschriebenen Zusammensetzungen liegt das Molverhältnis der auf das Polyisocyanat 1 zurückgehenden Einheiten zu den auf das Polyisocyanat 2 zurückgehenden Einheiten in dem resultierenden Polyurethan im Bereich von etwa 0,1 bis 50 zu 50 bis 99,9. Bevorzugt ist es jedoch, wenn das Molverhältnis der auf das Polyisocyanat 1 zurückgehenden Einheiten zu den auf das Polyisocyanat 2 zurückgehenden Einheiten im Polyurethan im Bereich von etwa 10 bis 20 zu 80 bis 90 beträgt, da dadurch Polymere erhalten werden, welche gegenüber solchen mit umgekehrten Molverhältnis eine geringere Viskosität aufweisen und somit besser verarbeitet werden können.

Als Polyole können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Capro-lacton und Startern wie den vorgenannten zwei- oder dreiwertigen Alkoholen.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylo-nitril/Butadien-Copolymere, wie sie beispielsweise aus Epoxiden oder Aminoalkoholen und carboxylterminierten Acrylonitril/Butadien-Copolymeren hergestellt werden können; sowie hydrierte polyhydroxyfunktionelle Polymere oder Copolymere von Dienen.

Vorzugsweise werden in der erfindungsgemäßen Zusammensetzung Polyoxyalkylenpolyole, insbesondere Polyoxyethylen- und Polyoxypropylenpolyole eingesetzt. In einer besonders bevorzugten Ausführungsform weisen diese Polyole ein Molekulargewicht Mw im Bereich von 500 bis 10000, insbesondere 2000 bis 6000 auf.

Das Polyol oder Polyolgemisch weist zweckmäßig eine mittlere Polyolfunktionalität im Bereich von ≥ 1 bis ≤ 3, insbesondere von ≥ 2 bis ≤ 3, auf. Dabei ergibt sich die mittlere Polyolfunktionalität eines Polyolgemischs als die Summe der Polyolfunktionalitäten der einzelnen Polyolkomponenten, multipliziert mit ihrem Anteil an dem jeweiligen Polyolgemisch. Bevorzugt weisen Polyole mit einer Funktionalität > 2 primäre OH-Gruppen auf. Bei Polyolen mit einer Funktionalität von ≤ 2 ist es hingegen bevorzugt, wenn diese im Wesentlichen sekundäre OH-Gruppen aufweisen. Es ist besonders bevorzugt, dass das mindestens eine Polyol auf einem Polyolgemisch beruht, das ein Polyol mit einer Funktionalität von etwa 3, das im Wesentlichen primäre OH-Gruppen enthält, und ein Polyol mit einer Funktionalität von etwa 2, das im Wesentlichen sekundäre OH-Gruppen enthält, umfasst.

Bevorzugt besteht das mindestens eine Polyol aus einer Mischung aus difunktionellen und trifunktionellen Polyolen, die in einem Verhältnis von 9:1 bis 1:9, insbesondere 1:3 bis 1:7, vorliegen. Der Gesamtgehalt der auf die Polyole zurückgehenden Einheiten im Polyurethan beträgt vorzugsweise 50 bis 98 Gew.-%, insbesondere 75 bis 92 Gew.-%, bezogen auf die Gesamtmasse des Polyurethans. Bezogen auf die Zusammensetzung kann der Anteil der Polyole jedoch auch deutlich darunter liegen.

Neben dem vorstehend beschriebenen Polyurethan kann die Zusammensetzung weitere auf den jeweiligen Anwendungszweck abgestimmte konventionelle Polyurethanpolymere mit daran gebundenen Isocyanatgruppen enthalten. In Zusammenhang mit Klebstoffzusammensetzungen liefert insbesondere die Einbeziehung eines weiteren Polyurethanpolymers, das sich von mindestens einem Polyisocyanat, einem Polyol mit einer Funktionalität von etwa 3 und einem Molekulargewicht von etwa 4800, das im Wesentlichen primäre OH-Gruppen enthält, und einem Polyol mit einer Funktionalität von etwa 2 und einem Molekulargewicht von etwa 4000, das im Wesentlichen sekundäre OH-Gruppen enthält, ableitet, Kleb- und Dichtstoffe mit besonders guten Eigenschaften. Insbesondere lässt sich durch die Verwendung eines Polyolgemisches die Mechanik der Zusammensetzung, beispielweise die Dehnung und die Zugfestigkeit, über einen weiten Bereich variieren. Der Anteil eines solchen zusätzlichen konventionellen Polyurethanes beträgt vorzugsweise nicht mehr als 50 Gew.-% bezogen auf die Gesamtmasse der Polyurethane, besonders bevorzugt enthält die Zusammensetzung etwa 20 bis 45 Gew.-%, bezogen auf die Gesamtmasse der Polyurethane, an zusätzlichem Polyurethan.

Für die Reaktion des mindestens einen Polyols mit dem mindestens einen Polyisocyanat 1 bzw. des Polyurethanprepolymers mit dem vom Polyisocyanat 1 unterschiedlichen (aromatischen) Polyisocyanates 2 ist es zweckmäßig, einen Katalysator, der die Reaktion der Isocyanate mit Polyolen beschleunigt, einzubeziehen. Dabei handelt es sich vorzugsweise um Metall-Katalysatoren, wie Organozinnverbindungen, Bismutverbindungen, und tertiäre Aminogruppen enthaltende Verbindungen sowie Gemische davon. Der Katalysator bevorzugt zweckmäßigerweise die NCO:OH-Reaktion gegenüber der NCO:Wasser-Reaktion, was zum Beispiel bei Fettsäuresalzen von Bismut III der Fall ist. Solche Katalysatoren werden allerdings durch Feuchtigkeit zerstört und verlieren ihre Reaktivität, so dass ein Trocknen der Ausgangsstoffe und das Arbeiten unter Bedingungen geringer Feuchtigkeit erforderlich ist.

Der Einsatz von Metall-Katalysatoren, wie Dibutylzinndiacetat, Dibutylzinndilaurat, Dibutylzinndichlorid, Dibutylzinndiacetylacetonat und Dioctylzinnlaurat, ist mit besonderen Vorteilen verbunden. Als Bismutverbindungen sind Bismuttrioctoat und Bismut-tris-(neodecanoat) zweckmäßig einzusetzen. Als tertiäre Aminogruppen enthaltende Verbindungen können insbesondere 2,2'-Dimorpholinodiethylether (DMDEE), 1,4-Diazabicyclo[2.2.2]octan (DABCO), flüssiges blockiertes Isophorondiamin, (1,2,2,6,6-pentamethyl-4-piperidinyl)sebacat, oder 1-Methyl-8-(1,3,3,6,6-pentamethyl-4-piperidinyl)sebacat in das Reaktionsgemisch einbezogen werden. Ebenso können Gemische dieser Verbindungen verwendet werden. Katalysatoren werden vorzugsweise in einer Menge von 0,01 bis 5 Gew.-%, insbesondere 0,01 bis 1 Gew.-%, bezogen auf Masse des Polyurethans, eingesetzt.

Weiterhin können in die Zusammensetzung Füllstoffe einbezogen werden, bei denen es sich zweckmäßig um anorganische oder organische Füllstoffe handelt, wie zum Beispiel gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calzinierte Kaoline, Aluminiumoxyde, Aluminiumhydroxyde, Kieselsäuren, insbesondere hochdisperse Kieselsäuren aus Pyrolyseprozessen, Ruße, PVC-Pulver und Hohlkugeln. Ebenfalls können Fasern, beispielsweise auf Basis von Polyethylen und Pigmente wie Titandioxid oder Eisenoxide, in die Polyurethanzusammensetzungen einbezogen werden. Vorzugsweise wird Calciumcarbonat, Pigment und ein Silan, insbesondere 3-Glycidoxypropyltrimethoxysilan, in die Urethanzusammensetzungen einbezogen.

Darüber hinaus können weitere optionale Additive in die erfindungsgemäße Zusammensetzung einbezogen werden, die im Folgenden beschrieben sind:
- Haftvermittler;
- Rheologiemodifizierer, wie beispielsweise Verdickungsmittel oder Thioxtropiermittel, zum Beispiel Harnstoffverbindungen, Polyamidwachse, Bentonite oder pyrogene Kieselsäuren, Weichmacher, Pigmente;
- Latente Härter, insbesondere blockierte Amine;
- Trocknungsmittel, wie beispielsweise Molekularsiebe, Calciumoxid, hochreaktive Isocyanate, wie p-Tosylisocyanat, Orthoameisensäureester, Alkoxysilane wie Tetraethoxysilan;
- Organoalkoxysilane, im Folgenden auch "Silane" genannt, wie beispielsweise Epoxysilane, (Meth)acrylsilane, Isocyanatosilane, Vinylsilane, Carbamatosilane, Alkylsilane, S-(Alkylcarbonyl)-mercaptosilane, Aldiminosilane, sowie oligomere Formen der Silane;
- Stabilisatoren gegen Licht, Wärme und UV-Strahlung;
- flammenhemmende Substanzen;
- oberflächenaktive Substanzen, wie beispielsweise Netzmittel, Verlaufsmittel, Entlüftungsmittel oder Entschäumer;
- Biozide, wie beispielsweise Algizide, Pestizide, Fungizide oder das Pilzwachstum hemmende Substanzen.

Ein weiterer Aspekt der vorliegenden Erfindung betrifft ein Polyurethan, erhältlich durch die Umsetzung mindestens eines Polyols mit mindestens einem Polyisocyanat 1, wobei das Verhältnis der OH-Gruppen der Polyole zu den Polyisocanatgruppen mehr als 1:1 beträgt, für einen Zeitraum, bis keine freien Isocyanatgruppen mehr vorhanden sind, und anschließende Umsetzung des entstehenden Polyurethanprepolymers mit mindestens einem vom Polyisocyanat 1 unterschiedlichen Polyisocyanat 2, wobei die Isocyanatgruppen aus den Polyisocyanaten 1 und 2 gegenüber den OH-Gruppen aus den Polyolen über beide Reaktionsschritte im Überschuss vorliegen.

Die im Vorstehenden beschriebenen bevorzugten Ausgestaltungen über die Zusammensetzungen, umfassend ein Polyurethan, gelten entsprechend ebenfalls für das vorstehend beschriebene Polyurethan selbst.

Die vorstehend beschriebene erfindungsgemäße Zusammensetzung kann zweckmäßig als Klebstoff oder Bestandteil eines Klebstoffs verwendet werden. Insbesondere handelt es sich bei dem beschriebenen Klebstoff um einen 1K-Klebstoff. Alternativ können die vorstehend beschriebenen Zusammensetzungen als Dichtstoff oder Bestandteil eines Dichtstoffes verwendet werden.

Insbesondere handelt es sich dabei um Kleb- oder Dichtstoffe, welche bei Raumtemperatur applizierbar sind.

Die vorliegende Erfindung betrifft auch ein Verfahren zum Verbinden von Substraten, umfassend das Aufbringen einer Zusammensetzung wie vorstehend beschrieben, auf mindestens einen Teil eines Substrats S1, das In-Kontakt-Bringen der mit der Zusammensetzung versehenen Oberfläche des Substrats S1 mit einem Substrat S2 und anschließenden Aushärten der Zusammensetzung.

Die erfindungsgemäßen Zusammensetzungen, enthaltend ein Polyurethan, wie vorstehend beschrieben, zeichnen sich durch eine signifikant erhöhte Durchhärtungsgeschwindigkeit gegenüber konventionellen Zusammensetzungen, die Polyurethane vergleichbarer Zusammensetzung enthalten, aus. Gleichzeitig wird die Mechanik eines mit einem erfindungsgemäßen Polyurethan formulierten Klebstoffs verbessert, so dass auf den Einsatz von Vernetzern verzichtet werden kann. Erfindungsgemäß hergestellte Prepolymere verzichten in den meisten Fällen auf den Einsatz von gesundheitlich bedenkliche MDI, sodass ihr Einsatz vor allem in Systemen vorteilhaft ist, in denen der Restmonomergehalt an MDI < 0,1% betragen muss.

Die Erfindung wird im Weiteren durch Beispiele illustriert, die jedoch in keiner Weise dessen Umfang einschränken sollen:

### Beispiel 1

### Herstellung des PU Prepolymers 1

1300 g Polyoxypropylendiol (Acclaim^{®} 4200 N, Bayer MaterialScience AG; OH-Zahl 28.5 mg KOH/g), 2600 g Polyoxypropylenpolyoxyethylentriol (Caradol^{®} MD34-02, Shell Chemicals Ltd., UK; OH-Zahl 35.0 mg KOH/g), 600 g 4,4'-Methylendiphenyldiisocyanat (4,4'-MDI; Desmodur^{®} 44 MC L, Bayer MaterialScience AG) und 500 g Diisodecylphthalat (DIDP; Palatinol^{®} 10P, BASF SE, Deutschland) wurden nach bekanntem Verfahren bei 80°C zu einem NCOterminierten Polyurethanpolymer mit einem Gehalt an freien Isocyanatgruppen von 2.05 Gew.-% umgesetzt.

### Herstellung der erfindungsgemäßen PU-Prepolymere

In einem Reaktor werden in einer ersten Stufe die Polyole zusammen mit einem Katalysator und der in Tabelle 1 angegebenen Menge HDI (P2-P5) oder MDI (P6) umgesetzt, bis die Isocyanatgruppen komplett abgeblockt sind. Anschließend wird das TDI in der angegebenen Menge vollständig zugegeben und mit den vorhandenen OH-Gruppen des entstandenen Prepolymers umgesetzt.

Die Zusammensetzungen der verwendeten Prepolymere mit 0, 10, 20 und 30% HDI sowie mit 20% MDI sind in Tabelle 1 angegeben. Entsprechende Klebstoffe werden durch Vermischen dieser Prepolymere mit einem weiteren Polyurethanprepolymer sowie konventionellen Klebstoffadditiven formuliert. In der Vergleichszusammensetzung enthält das Prepolymer ausschließlich TDI, während HDI der Gesamtmischung als Zusatzstoff zugegeben wird.

**Tabelle 1**

| Rohstoff | Menge (Gew.-%) | | | | |
|---|---|---|---|---|---|
| PU-Prepolymer | ***P2*** | ***P3*** | ***P4*** | ***P5*** | **P6** |
| Triol mit primären OH-Gruppen, MW=4800 | 73 | 73 | 73 | 73 | 73 |
| Diol mit sekundären OH-Gruppen, MW=4000 | 18 | 18 | 18 | 18 | 18 |
| HDI | | 0.9 | 1.81 | 2.71 | |
| MDI | | | | | 2.6 |
| Dabco | 0.03 | 0.03 | 0.03 | 0.03 | 0.03 |
| TDI | 8.97 | 8.07 | 7.16 | 6.26 | 6.37 |

Die Zusammensetzungen sowie physikalischen Eigenschaften der Klebstoffe sind in Tabelle 2 wiedergegeben. Dabei zeigt sich, dass das Vergleichsbeispiel (Ref.) eine signifikant langsamere Durchhärtezeit von 14 Tagen aufweist, während die erfindungsgemäßen Beispiele mit 9 Tagen deutlich schneller aushärten. Gleichzeitig weisen die erfindungsgemäßen Zusammensetzungen eine deutlich höhere Bruchdehnung auf, während die weiteren Eigenschaften im Wesentlichen mit denen des Vergleichsprodukts identisch sind.

**Tabelle 2**

| Rohstoff (Gew.-%) | ***Ref.*** | ***1*** | ***2*** | ***3*** | ***4*** |
|---|---|---|---|---|---|
| PU-Prepolymer 1 | 9.00 | 9.00 | 9.00 | 9.00 | 9.00 |
| PU-Prepolymer P2 (0% HDI) | 17.00 | | | | |
| PU-Prepolymer P3 (10% HDI) | | 18.50 | | | |
| PU-Prepolymer P4 (20% HDI) | | | 18.50 | | |
| PU-Prepolymer P5 (30% HDI) | | | | 18.50 | |
| PU-Prepolymer P6 (20% MDI) | | | | | 18.50 |
| HDI-Biuret | 1.50 | 0.00 | 0.00 | 0.00 | 0.00 |
| PTSI | 0.50 | 0.50 | 0.50 | 0.50 | 0.50 |
| Weichmacher | 26.70 | 26.70 | 26.70 | 26.70 | 26.70 |
| CaCO3 Füllstoff | 38.50 | 38.50 | 38.50 | 38.50 | 38.50 |
| Aerosil | 4.50 | 4.50 | 4.50 | 4.50 | 4.50 |
| Vestamin A139 | 1.30 | 1.30 | 1.30 | 1.30 | 1.30 |
| 5% Säure in Weichmacher | 0.30 | 0.30 | 0.30 | 0.30 | 0.30 |
| 2.5% DBTDL in Weichmacher | 0.80 | 0.80 | 0.80 | 0.80 | 0.80 |
| | | | | | |
| Hautbildezeit [min] | 40 | 30 | 30 | 25 | 25 |
| Zugfestigkeit bei Bruch [MPa] | 3.6 | 3.5 | 4.2 | 4.1 | 4.1 |
| Durchhärtegeschwindigkeit [mm/Tage] | 2.6/14 | 2.7/9 | 3.4/9 | 3.6/9 | 3.2/10 |

### Beschreibung der Messmethoden

Die **Hautbildungszeit** (Zeit bis zur Klebefreiheit, "tack-free time") wurde bei 23°C und 50% relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Die **Zugfestigkeit** wurde nach DIN EN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Zur Bestimmung der **Durchhärtung** wurde die Zusammensetzung in eine Teflonform mit keilförmiger Aussparung appliziert und mittels Holzspatel abgestrichen. Nach 24 Stunden bei 10°C und 50% relativer Luftfeuchtigkeit wird vom dünnen Ende des Keiles her die nun vernetzte Zusammensetzung von der Teflonform sorgfältig abgehoben, bis zu der Stelle (d.h. Dicke), an welcher auf der geneigten Keilaussparungsfläche unausgehärtete Zusammensetzung gefunden wird. Dieser Wert ist in Tabelle 2 in mm angegeben (erster Wert). Im gleichen Versuch wurde die Zeit in Tagen bestimmt, nach welcher 10 mm der Zusammensetzung vollständig durchgehärtet waren (zweiter Wert).

## Patentansprüche

1. Zusammensetzung, umfassend ein Polyurethan, wobei das Polyurethan erhältlich ist durch Umsetzung mindestens eines Polyols mit mindestens einem Polyisocyanat 1, wobei das Verhältnis der OH-Gruppen der Polyole zu den Isocyanatgruppen mehr als 1:1 beträgt, für einen Zeitraum, bis keine freien Isocyanatgruppen mehr vorhanden sind, und anschließende Umsetzung des entstehenden Polyurethanprepolymers mit mindestens einem vom Polyisocyanat 1 unterschiedlichen Polyisocyanat 2, wobei die Isocyanatgruppen aus den Polyisocyanaten 1 und 2 gegenüber den OH-Gruppen aus den Polyolen über die beiden Reaktionsschritte im Überschuss vorliegen.

2. Zusammensetzung gemäß Anspruch 1, **dadurch gekennzeichnet, dass** das Polyisocyanat 1 aus aliphatischen und cycloaliphatischen Polyisocyanaten ausgewählt ist.

3. Zusammensetzung gemäß Anspruch 1, **dadurch gekennzeichnet, dass** das Polyisocyanat 1 ausgewählt ist aus Hexamethylendiisocyanat (HDI) und Methylendiphenyldiisocyanat (MDI), vorzugsweise Hexamethylendiisocyanat (HDI) ist.

4. Zusammensetzung nach einem der vorhergehenden Ansprüche, **dadurch gekennzeichnet, dass** es sich bei dem Polyisocyanat 2 um Tolylendi-isocyanat (TDI) handelt.

5. Zusammensetzung nach einem der vorhergehenden Ansprüche, **dadurch gekennzeichnet, dass** das Molverhältnis der auf das Polyisocyanat 1 zurückgehenden Einheiten zu den auf das Polyisocyanat 2 zurückgehenden Einheiten in dem resultierenden Polyurethan im Bereich von etwa 0,1 bis 50 zu 50 bis 99,9 liegt.

6. Zusammensetzung gemäß Anspruch 5, **dadurch gekennzeichnet, dass** das Molverhältnis der auf das Polyisocyanat 1 zurückgehenden Einheiten zu den auf das Polyisocyanat 2 zurückgehenden Einheiten in dem resultierenden Polyurethan im Bereich von etwa 10 bis 20 : 80 bis 90 liegt.

7. Zusammensetzung nach einem der vorhergehenden Ansprüche, **dadurch gekennzeichnet, dass** die Zusammensetzung zumindestens ein Polyol mit einer Funktionalität von etwa 3, das im Wesentlichen primäre OH-Gruppen enthält, und ein Polyol mit einer Funktionalität von etwa 2, das im Wesentlichen sekundäre OH-Gruppen enthält, umfasst.

8. Zusammensetzung nach einem der vorhergehenden Ansprüche, **dadurch gekennzeichnet, dass** bei der Reaktion des Polyisocyanats 1 mit dem mindestens einen Polyol ein Katalysator, insbesondere eine tertiäre Aminogruppen enthaltende Verbindung oder ein Metall-Katalysator, eingesetzt wird.

9. Zusammensetzung nach einem der vorhergehenden Ansprüche, **dadurch gekennzeichnet, dass** in die Zusammensetzung ein weiteres Polyurethanpolymer mit daran gebundenen Isocyanatgruppen, bevorzugt ein Polyurethanpolymer, das sich von mindestens einem Polyisocyanat, einem Polyol mit einer Funktionalität von etwa 3, das im Wesentlichen primäre OH-Gruppen enthält, und einem Polyol mit einer Funktionalität von etwa 2, das im Wesentlichen sekundäre OH-Gruppen enthält, ableitet, eingesetzt wird.

10. Verwendung einer Zusammensetzung nach einem der Ansprüche 1 bis 9 als Klebstoff oder Bestandteil eines Klebstoffs, insbesondere als 1-Komponentenklebstoff.

11. Verwendung einer Zusammensetzung nach einem der vorhergehenden Ansprüche als Dichtstoff,.

12. Verfahren zur Herstellung einer Polyurethanzusammensetzung, umfassend:
a) die Umsetzung mindestens eines Polyols mit mindestens einem Polyisocyanat 1, wobei das Verhältnis der OH-Gruppen der Polyole zu den Isocyanatgruppen mehr als 1:1 beträgt, und
b) die Umsetzung des entstehenden Polyurethanprepolymers mit mindestens einem vom Polyisocyanat 1 unterschiedlichen Polyisocyanat 2,
wobei die Isocyanatgruppen aus den Polyisocyanaten 1 und 2 gegenüber den OH-Gruppen aus den Polyolen über die beiden Reaktionsschritte im Überschuss vorliegen.

13. Verfahren zum Verbinden von Substraten, umfassend das Aufbringen einer Zusammensetzung gemäß einem der Ansprüche 1 bis 9 auf mindestens einen Teil eines Substrats S1, das In-Kontakt-Bringen der mit der Zusammensetzung versehenen Oberfläche des Substrats S1 mit einem Substrat S2 und anschließendes Aushärten der Zusammensetzung.

14. Klebstoff enthaltend eine Zusammensetzung gemäß einem der Ansprüche 1 bis 9.

15. Polyurethan, erhältlich durch die Umsetzung mindestens eines Polyols mit mindestens einem Polyisocyanat 1, wobei das Verhältnis der OH-Gruppen der Polyole zu den Polyisocanatgruppen mehr als 1:1 beträgt, für einen Zeitraum, bis keine freien Isocyanatgruppen mehr vorhanden sind, und anschließende Umsetzung des entstehenden Polyurethanprepolymers mit mindestens einem vom Polyisocyanat 1 unterschiedlichen Polyisocyanat 2, wobei die Isocyanatgruppen aus den Polyisocyanaten 1 und 2 gegenüber den OH-Gruppen aus den Polyolen über beide Reaktionsschritte im Überschuss vorliegen.
